# EUROPEAN PATENT SPECIFICATION

(11) **EP 1 907 834 B1**
(45) Date of publication and mention of the grant of the patent: **12.06.2019**
(21) Application number: 06765043.2
(22) Date of filing: 20.07.2006
(51) Int. Cl.: G01B 7/00

(54) **APPARATUS FOR DETERMINING THE POSITION OF A MOVEABLE APPARATUS ON A SURFACE**
VORRICHTUNG ZUR BESTIMMUNG DER LAGE EINER BEWEGLICHEN VORRICHTUNG AUF EINER OBERFLÄCHE
APPAREIL PERMETTANT DE DETERMINER LA POSITION D'UN APPAREIL MOBILE SUR UNE SURFACE

(30) Priority: 22.07.2005 GB 0515031
(43) Date of publication of application: 09.04.2008
(60) Divisional application: 12168963.2
(73) Proprietor: University of Newcastle upon Tyne, Newcastle Upon Tyne, NE1 7RU (GB)
(72) Inventor: ROSKILLY, Anthony Paul, Longhorsley Northumberland NE65 8XQ (GB); HESLOP, Jonathan, Walker Newcastle Upon Tyne NE6 2RB (GB); TUNWATTANA, Noppadon, Gateshead NE8 4AP (GB)
(74) Representative: Vinsome, Rex Martin
(86) International application number: PCT/GB2006/002713
(87) International publication number: WO 2007/010265

(56) References cited:
- WO-A-02/086474
- DE-A1- 3 506 638
- FR-A- 2 861 457
- US-A- 4 671 650
- US-A- 6 038 280
- US-A1- 2005 015 209
- US-B1- 6 317 387
- US-H- H1 409

## Description

The present invention relates to an apparatus for determining the position of a moveable apparatus on a surface, and relates particularly, but not exclusively, to an apparatus for determining the position of a moveable cleaning and/or inspection apparatus on the surface of the hull of a ship.

The most common method of inspecting and cleaning a ship's hull is to dry-dock the vessel, grit blasting or scrubbing the surface to remove fouling. This is an expensive, labour intensive and time-consuming process, being performed every 5 years for a vessel up to 12 yrs in service and every 2.5 years thereafter for its remaining lifetime to maintain its seaworthiness.

Alternately, divers are employed with underwater scrubbers to clean the surface of the hull. Underwater cleaning provides a method of continual removal of fouling and marine growth between dry-dockings, increasing the efficiency and reducing the running costs of the vessel. However, this is labour intensive, hazardous and time-consuming operation which is not environmentally friendly.

In recent years, robotic technology has advanced to a point where remotely operated vehicles (ROV) and autonomous underwater vehicles (AUV) can be utilised to perform specific tasks. However, ROVs suffer from the drawback of requiring a skilled operator to manoeuvre the robot round a given maintenance path and clear line of sight. The AUVs developed for this purpose utilise 3-D sonar imaging to guide the vehicle underwater to areas with fouling, which is complex and expensive to implement.

US Patent application US 20050015209 discloses an eddy current testing apparatus having an eddy current testing head including an eddy current generator and an eddy current receiver. The testing apparatus also includes an optical arrangement for determining the position coordinates of the eddy current testing head, the eddy current testing head being used to determine parameters such as flaws or defects on or under the surface of the object being tested.

This arrangement suffers from the disadvantage that it only optically detects surface features in order to determine the position of the eddy current testing head relative to the object. As a result, surface and near surface flaws can be detected as the eddy current detector means suffers from limited subsurface depth penetration, that is only thin plate or a few millimetres beneath the surface of specimen thickness can be successfully examined using this system.

WO 02/086474 discloses a hand-held probe for non-destructive testing of an object, comprising detector means for providing information on features (defects) within said object, and optical detector means for tracking motion of the probe relative to at least one surface feature of the object.

Further known apparatus are disclosed in US 2005/015209, DE 3506638, US 6317387, FR 2861457, US HI 409, US 4671650, DE 4314636, US 5189612 and US 3899734. DE3506638, for instance, discloses the non-destructive testing of an object by means of a self-propelled apparatus comprising detector means for inspecting the object, a "mouse" orientation unit for tracking motion of the apparatus relative to surface features of the object, and means for controlling said driving means in response to data from said orientation unit.

Preferred embodiments of the present invention seek to overcome the above disadvantages of the prior art.

According to a first aspect of the present invention, there is provided a position determining apparatus comprising:
magnetic detector means for causing magnetic flux to be directed through the surface of an object and for detecting variations in magnetic flux caused by at least one sub-surface or surface feature of the object; and
optical detector means for tracking motion of the apparatus relative to at least one surface feature of the object;
drive means for driving the apparatus across the surface of the object; and
control means for controlling the drive means in response to data provided by the magnetic detector means representing sub-surface or surface features of the object, and in response to data provided by the optical detector means.

By providing magnetic detector means for detecting variations in magnetic flux caused by at least one sub-surface or surface feature of the object, and optical detector means for determining changes in position of the apparatus relative to one or more features of the object, this provides the advantage that the position of the apparatus relative to the object can be more accurately determined, since the magnetic detector means can be used to detect permanent subsurface or surface features of the object, which are less prone to give rise to false readings as a result of fouling on the surface of the object, and position data obtained by the optical detector means can be used to determine the position of the apparatus relative to one or more of said permanent subsurface or surface features. Also, by determining changes in magnetic flux, the magnetic detector means, for certain thickness of material for detecting particular types of subsurface or surface features, does not need to be in direct contact with the surface of the object, which minimises the risk of contact damage to the surface of the object and/or the magnetic detector means.

The magnetic detector means provides the advantage of enabling features further below the surface to be detected than in the case of prior art apparatus, for example, features of the support skeleton of a ship and welded seams between plates. Such features are less prone to variation which may give rise to false readings, for example as a result of accumulation of marine growth on or corrosion of the surface of the hull of a ship.

The magnetic flux directing means may comprise at least one electromagnet.

This provides the advantage of enabling the magnetic flux density directed through the surface of the object to be adjusted to a level suited to the particular application of the apparatus.

The magnetic flux detector means may comprise at least one Hall Effect sensor.

This provides the advantage of enabling magnetic flux to be determined at a location spaced from the surface of the object, as a result of which the magnetic flux detector means does not need to be in direct contact with the surface of the object. This minimises the risk of damage to the surface and/or the magnetic flux detector means.

The optical detector means may comprise illumination means for illuminating the surface of the object with light, and light detector means for detecting light reflected from said surface.

The light detector means may be adapted to detect the intensity of light reflected from a plurality of locations on said surface.

The light detector means may comprise an array of optical detectors.

The optical detector means may be adapted to determine changes in position in said array of at least one image pattern received by a plurality of said optical detector.

At least one said optical detector may be a CMOS detector or charge coupled device (CCD) detector.

The optical detector means may further comprise beam splitter means and focussing means for focussing light onto a plurality of sensors with different focal lengths.

This provides the advantage of optimising the depth of field of the optical detector means and maximising the range over which the surface of the object is focussed onto one or more sensors, and also provides the advantage that no auto focus arrangement is necessary in order to illuminate the surface of the object, as a result of which the complexity and cost of the apparatus is reduced.

In a preferred embodiment, the illumination means is adapted to illuminate the surface in a direction substantially at right angles to the surface, and the light detector means is adapted to detect light reflected from the surface in a direction substantially at right angles from the surface.

This provides the advantage of minimising the occurrence of errors as a result of shadow effects and maximising the intensity of detectable light reflected from the surface.

The illumination means may include light directing means for directing a light beam from a light source onto the surface, and directing a light beam reflected from the surface to a light detector.

The light directing means may include a beam splitter.

The light directing means may include a reflector having at least one aperture.

The optical detector means may include a telecentric lens assembly.

This provides the advantage of minimising the occurrence of errors as a result of changes in image size because of variation in distance between the surface of the optical detector means.

The optical detector means may be adapted to provide corrected image data representing an image of a feature on said surface, wherein the size of said image is corrected to compensate for changes in distance between the surface and the optical detector means.

The apparatus may further comprise correction means for correcting position data determined by said optical detector means using position data determined by the magnetic detector means.

This provides the advantage of enabling motion drift of the robot to be detected and to compensate for surface variations, for example to compensate for robot slippage and surface roughness.

The apparatus may further comprise drive means for driving the apparatus across the surface of an object.

According to another aspect of the present invention, there is provided an inspection apparatus comprising inspection means for inspecting an object, and a position determining apparatus as defined above.

According to a further aspect of the present invention, there is provided a cleaning apparatus comprising cleaning means for cleaning a surface of an object, and a position determining apparatus as defined above.

According to a further aspect of the present invention, there is provided a method for determining the position of an apparatus according to said first aspect of the present invention on the surface of an object, the method comprising:
causing magnetic flux to be directed through the surface of the object;
detecting variations in magnetic flux caused by at least one sub-surface or surface feature of the object by means of magnetic detector means;
determining changes in position of the apparatus relative to at least one surface feature of the object by means of optical detector means;
driving the apparatus across said surface; and
controlling said driving by means of measurement data provided by the magnetic detector means and representing sub-surface or surface features of the object, and by means of measurement data provided by the optical detector means.

The method may further comprise correcting the size of an image of a feature on said surface to compensate for changes in distance between an optical detector means of the apparatus and the surface.

This provides the advantage of minimising the occurrence of errors in measurements as a result of changes in image size due to variation in distance between the surface and the apparatus.

The method may further comprise distinguishing between newly detected and previously detected features of the object.

Determining changes in position of the apparatus relative to at least one surface feature of the object may comprise illuminating the surface in a direction substantially at right angles to the surface, and detecting light reflected from the surface in a direction substantially at right angles from the surface.

Preferred embodiments of the invention will now be described, by way of example only and not in any limitative sense, with reference to the accompanying drawings in which:-
Figure 1A is a top view of a ship hull inspection and cleaning vehicle embodying the present invention;
Figure 1B is a perspective view of the vehicle of Figure 1a;
Figure 2A is a schematic front cross sectional view of a magnetic detector apparatus of the vehicle of Figures 1A and 1B;
Figure 2B is a side view of the magnetic detector apparatus of Figure 2A;
Figure 3A is a schematic side view of an optical detector apparatus of a first embodiment of the present invention for use in the vehicle of Figures 1A and 1B;
Figure 3B is a perspective partially cut away view of a housing of the optical detector apparatus of Figure 3A;
Figure 4 is a side view of an optical detector apparatus of a second embodiment of the invention;
Figures 5A and 5B illustrate the process of motion detection by the optical detector apparatus of Figures 3A and 4 at consecutive measuring times;
Figure 6 shows a flow diagram for a mapping process carried out by the vehicle of Figures 1A and 1B;
Figure 7 is a flow diagram showing a measurement process carried out by the apparatus of Figures 1A and 1B;
Figure 8 is a schematic representation of a hull inspection vehicle of a third embodiment of the present invention;
Figure 9 is a position detecting apparatus of a fourth embodiment of the present invention; and
Figure 10 is a side view of an optical detector apparatus of a fifth embodiment of the invention.

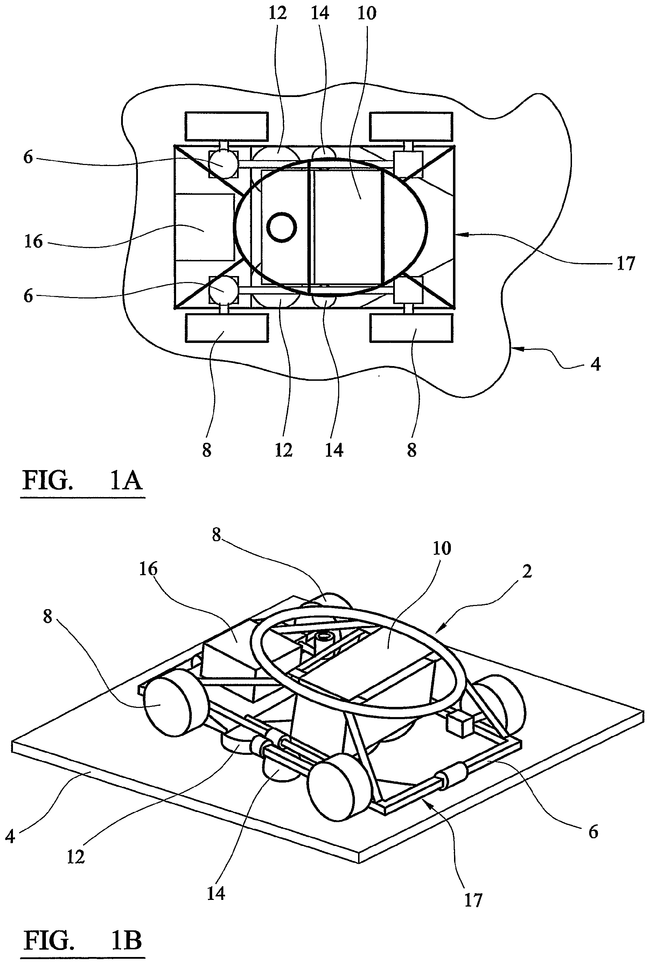

Referring to Figures 1A and 1B, a robotic inspection and cleaning vehicle 2 for inspecting the surface condition of and cleaning a hull 4 of a ship includes a power transmission system 6 for driving wheels 8 by means of an electric motor (not shown) to drive the vehicle 2 across the surface of the hull 4. The vehicle 2 includes a hull-cleaning unit 10, which operates by means of suction to clean marine fouling from the hull 4 in a manner which will be familiar to persons skilled in the art.

The vehicle 2 includes a magnetic landmark recognition system 12 for identifying surface and subsurface features of the ship, and an optical imaging dead reckoning system 14 which creates a two-dimensional map of the surface of the hull 4, as well as a controller 16 for controlling the magnetic landmark recognition system 12, optical image dead reckoning system 14, and controlling the driving of the vehicle 2 across the surface of the hull 4.

The vehicle 2 may be attached to the hull 4 by means of the magnetic landmark recognition system 12, by means of a separate magnetic attachment system (not shown), by means of suction produced by the cleaning apparatus 10 pulling the vehicle 2 to the surface 4 or by means of a combination of more than one of these. The vehicle 2 is also provided with an outer shell (not shown) designed to allow neutral buoyancy of the vehicle 2 in the water. The vehicle 2 will be designed with a frame 17 for mounting all constituent components.

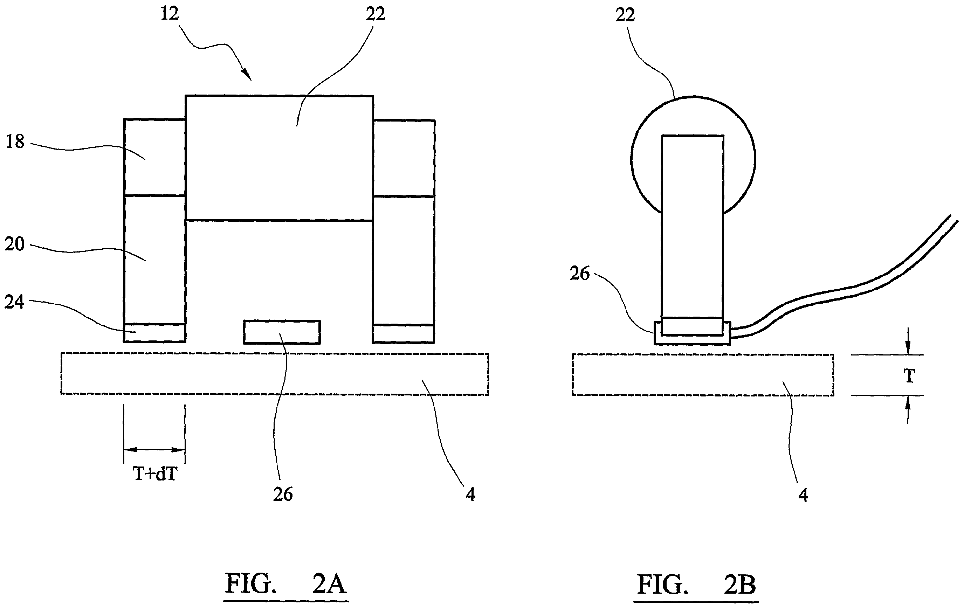

Referring to Figures 2A and 2B, the magnetic landmark recognition system 12 includes a powerful electromagnet 18 for producing a magnetic field and directing it through the surface of the hull 4 of the ship. The electromagnet 18 includes a U-shaped core 20 of a material chosen to provide the maximum range to saturation of the hull plating (such as grain oriented electrolytic steel) and a copper wire coil 22 wrapped around the centre section of the core 20. The number of turns of the coil 22 is dependent upon the magnetic flux density required to saturate the core 20 material, as will be familiar to persons skilled in the art.

The electromagnet 18 is held in a spring loaded wheeled mount (not shown) to maintain a minimum required distance (the air gap) between the surface of the hull 4 and the electromagnet 18, and sacrificial brushes 24 or another mechanism at the ends of the core 20 protect the U-shaped core 20 and the surface of the hull 4 from accidental contact (between the electromagnet and the surface) and ensure optimal magnetic saturation of the surface. A sensor array 26 containing one or more Hall Effect sensors is held between the ends of the core 20 a small distance from the surface of the hull 4 in order to detect magnetic flux leakage with the maximum sensitivity. In this way, the landmark recognition system 12 can travel relatively quickly over the surface of the hull 4, and can detect permanent landmark features on or below the surface of the hull, such as the joints in the skeletal structure of the ship and welded seam between plates.

It is envisaged that more than one sensor will be used in the sensor array 26, in order to provide verification of detection results.

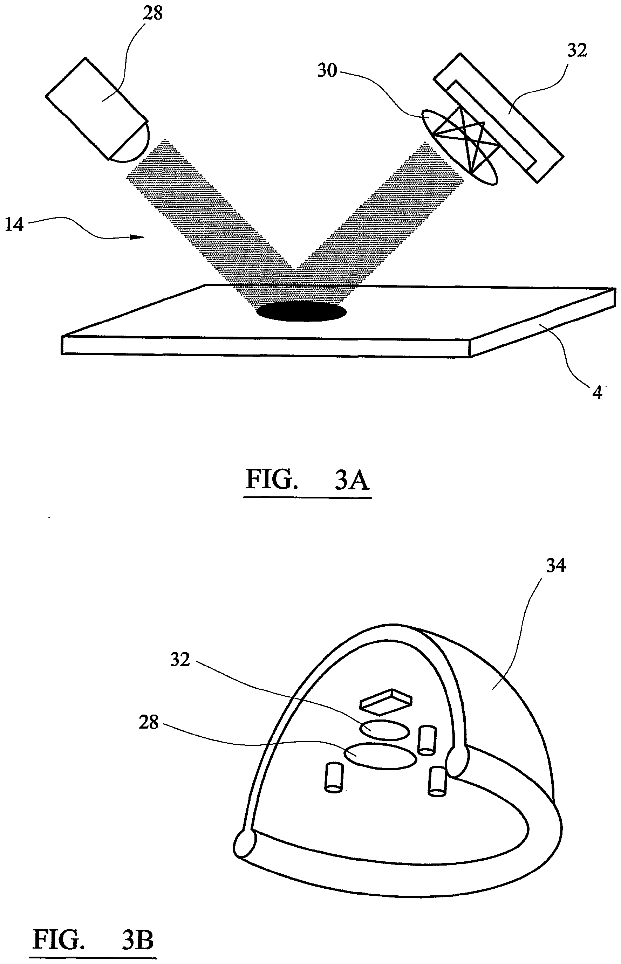

Referring now to Figures 3A and 3B, the optical dead reckoning system 14 of a first embodiment of the invention compares intensity patterns of light reflected from the surface of the hull 4 and recognises patterns of dark and light areas between subsequent frames to determine the direction and speed of travel of the vehicle 2 relative to the hull 4. The dead reckoning system 14 includes multiple intense monochromatic light sources 28, for example lasers or light emitting diodes, to illuminate the surface of the hull 4. The reflected light from the hull 4 is focused to maximise the depth of field by a lens 30 onto a CMOS or CCD image chip 32 which includes an array of optical detectors (not shown) providing signals representing the intensity of light received by each detector.

As shown in greater detail in Figure 3B, multiple light sources 28 are positioned in a housing 34 to illuminate over overlapping small areas to maximise the area of observation, and the imaging chip 32 is located centrally between the light sources 28 such that the lens 30 focuses the light on the surface of the imaging chip 32. Since the distance between the lens 30 and the chip 32 is always constant. The entire dead reckoning system 14 is housed within housing 34 having an appropriate sealing means such as a rubber seal 36 around its base in order to protect the optical system from the environment, and to ensure that only a thin film of water is present or that the system is kept dry. The optical dead reckoning system 14 is mounted in the frame of vehicle 2 via damping means (not shown), in order to minimise vibration produced as the vehicle 2 travels across the surface of the hull 4.

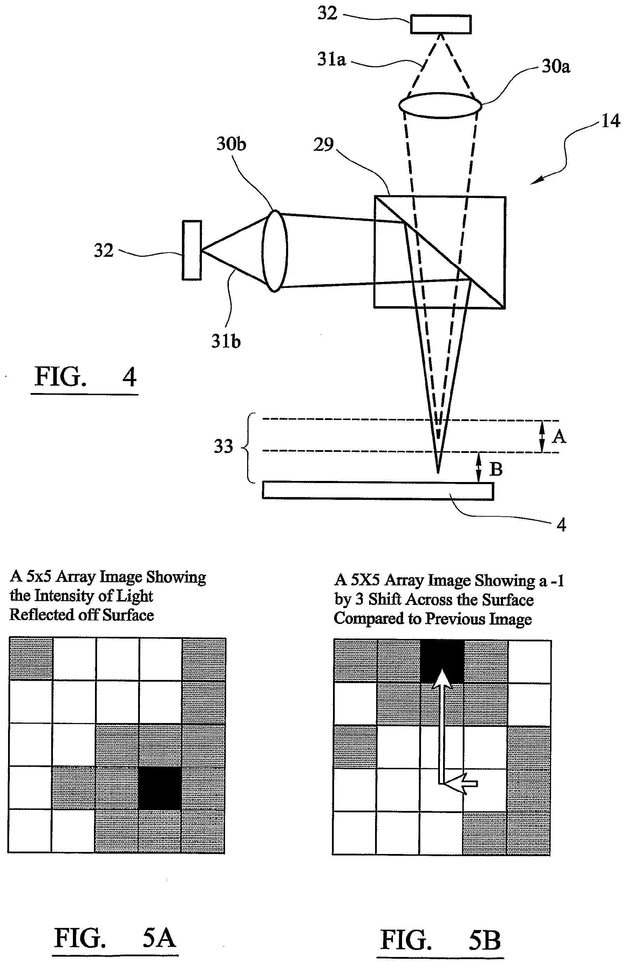

An optical dead reckoning system 14 of a second embodiment of the invention is shown in Figure 4 for maximising depth of field 33 over the visible area by means of a beam splitter 29. The beam splitter 29 divides the reflected light from the surface 4 into two beams 31a and 31b, which are focused onto the imaging chips 32 by respective lenses 30a and 30b of different focal lengths A and B, requiring no auto focus system. The imaging chips 32 process the images of the surface and the result is weighted depending on the quality of the image, where a high weighting indicates a greater reliance on the images from a particular chip 32 when used to calculate motion.

The imaging chip 32 produces an image made of pixels indicating the intensity of light striking the light sensitive material array on the chip, and represented in more detail in Figures 5A and 5B. In Figure 5B, the image represents a shift of -1 step in the X-direction and 3 steps in the Y-direction from the arrangement of Figure 5A. By comparing the images detected by the array in consecutive measurements, the X and Y coordinates of movement of the vehicle 2 across the hull 4 can be determined by means of a suitable controller (not shown), which may be mounted on the vehicle 2, or may be provided remotely, for example running on a computer.

The operation of the vehicle 2 will now be described.

In order to map the surface of the hull 4 to construct a map of magnetically detectable surface and subsurface structural features, the landmarks are fixed in a two-dimensional frame by accurate measurement of the lateral and longitudinal distance travelled by the vehicle 2 from a repeatable, known origin or starting point, by the optical dead reckoning system 14. Each feature within the map is coded in such away to minimise the data, for transfer and storage, to the essential information for locating the feature within the mapping frame, ideally being a three part identification code (Lₓₓ, Xₓₓ, Yₓₓ) based upon the landmark disturbance signal (Lₓₓ) representing the variation in magnetic flux density detectable by the magnetic landmark detection system 12, and the distance travelled from the origin (Xₓₓ, Yₓₓ) as measured by the optical dead reckoning system 14. This has the benefit of minimising the data transferred while maximising the mapping process.

The landmarks are categorised to identify the most likely structural features detected based upon the signal disturbance observed by the landmark detection system, and are organised according to their position relative to the origin and to adjacent landmarks. By using two or more magnetic landmark detection systems 12 on each vehicle 2, the mapping data can be checked and compared to ensure accuracy. This map data can then be stored for later use for navigation data on subsequent runs of the vehicle 2 across the surface 4.

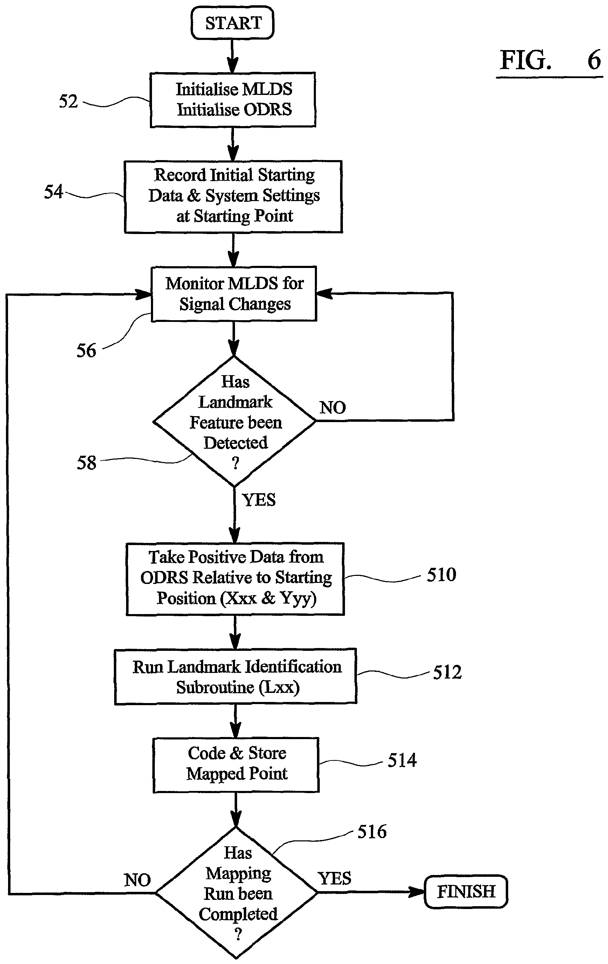

Referring to Figure 6, the landmark detection system 12 and the optical dead reckoning system 14 are initialised at step S2. The initial starting data and systems setting at the starting point are then recorded at step S4, and the landmark detection system 12 is then monitored for signal changes at step S6. It is then determined at step S8 whether a landmark feature has been detected. If a landmark feature is detected, the position data is taken from the optical dead reckoning system 14 relative to the starting position (i.e. Xₓₓ and Yₓₓ) at step S10, and a landmark identification sub routine is run at step S12 in order to determine the most likely type of landmark which has been detected. The three-part data code is then stored at step S14, and it is then determined at step S16 whether the mapping run has been completed.

When the landmark map has been created, it is then stored and used for navigating the vehicle 2 on subsequent runs over the surface of the hull 4. When the vehicle 2 is placed in the starting position, the starting data is used to configure the system to the settings of the mapping process to ensure repeatability of subsequent runs.

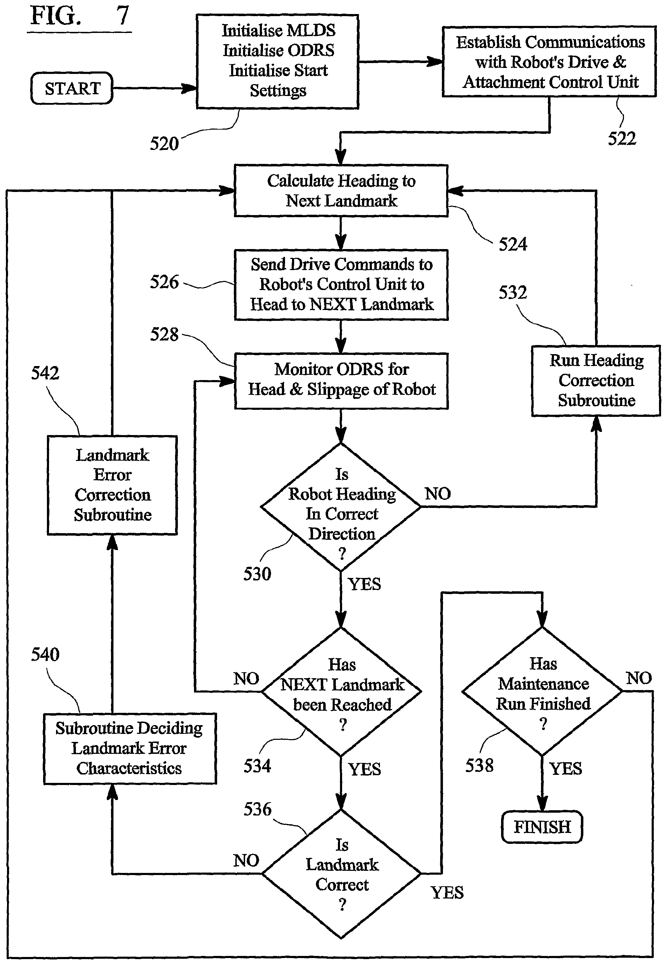

Referring to Figure 7, the original starting data is used to initialise the landmark recognition system 12 and dead reckoning system 14 and to configure the systems to their initial settings to ensure continuity with the mapping process on subsequent runs at step S20. Communication is then established with a drive control unit of the vehicle 2 at step S22, and initial heading information is sent at steps S24 and S26, which gives the direction and distance to the first landmark feature. The motion of the vehicle 2 is monitored at step S28 throughout operations by means of the optical dead reckoning system 14, which will detect deviations from the desired maintenance path, and update heading information at steps S30 and S32.

When a particular landmark feature is reached, as indicated by the landmark recognition system 12, the signal (Lₓₓ) and the two-dimensional coordinates (Xₓₓ, Yₓₓ) are compared to previous readings at step S34. If the signal indicates at step S36 that the vehicle 2 is at the correct landmark and position, then the navigational system commands the vehicle 2 at step S24 to proceed to the next landmark feature along the inspection or maintenance path, according to the mapped data. This process continues until the maintenance programme has been completed at step S38.

If the navigational system indicates that the vehicle 2 has not arrived at the correct landmark or position at step S36, through the multiple electromagnetic sensor arrangement of the landmark recognition system 12, then the control unit must decide at step S40 whether this is a new feature that can be added to the map, or whether this result is due to a flaw that has occurred since the previous maintenance run, whether the result is due to a spurious reading, or whether the vehicle has deviated from the desired path. If a new landmark is identified then this will be added and stored to the mapping data, and if the landmark is identified as flaw or area of corrosion then it will be indicated that further investigation is appropriate. Once the control unit has decided, then the navigational system decides at step S42 whether to continue along the same heading, to correct the path, or to track back to the previously corrected landmarks.

On subsequent runs, when a feature is detected this will be compared to expected mapped points. If this "new" feature does not correspond to any of the existing previously mapped points then it will be recognised as a new mapping feature, being added to the mapping data. The signal from the magnetic detection means will be compared to known feature signals, and a decision will be made on the likely nature of the feature, either being a new mapped point (added to the map increasing navigational accuracy), structure damage (for the attention of the operator for further investigation) or transient result (to be ignored).

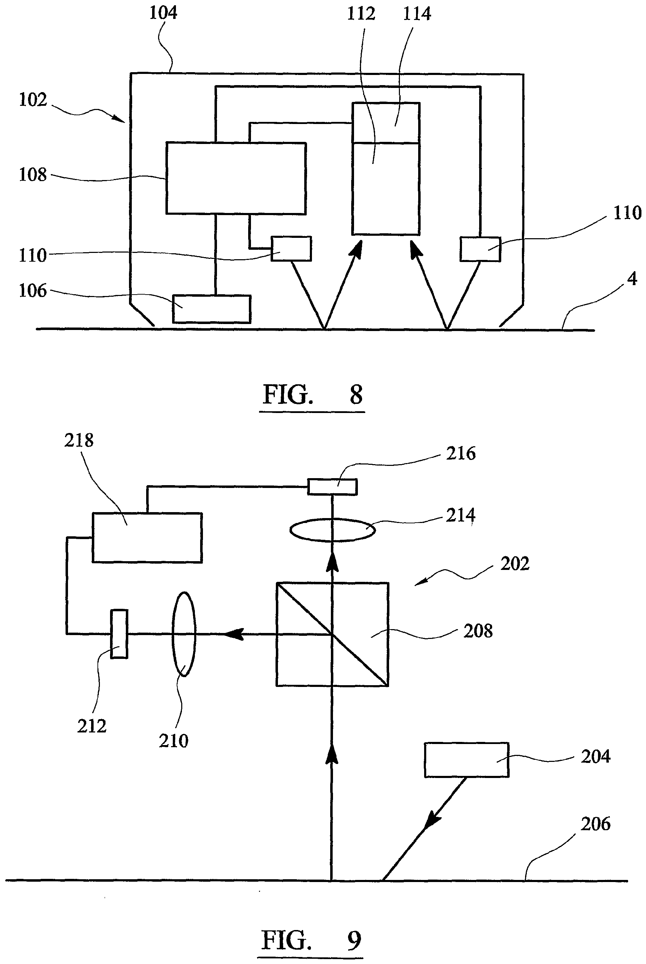

Figure 8 shows a hull inspection vehicle 102 of a third embodiment of the invention. The vehicle 102 has a housing 104 which contains a magnetic landmark recognition system 106 connected to a controller 108 and an optical position sensor including a pair of light sources 110 for illuminating the hull 4, and a telecentric lens systems 112 for receiving light reflected from the hull 4. As will be familiar to persons skilled in the art, the telecentric lens system 112 produces an image of constant size on a detector 114, regardless of the distance of the lens system 112 from the hull 4. In this way, the telecentric lens system 114 automatically compensates for variation in the size of an image of a feature on the surface of the hull 4 as the distance between the lens system 112 and the hull 4 changes as a result of irregularities in the surface of the hull 4. The light sources 110 and detector 112 are also connected to the controller 108. The power source to the light sources 110 may also be connected to the controller 108.

Figure 9 shows an optical position sensor of a fourth embodiment of the invention, and which can be used in a wide range of applications, for example in an optical computer mouse, or in a hull inspection and cleaning apparatus as shown in Figures 1A and 1B. The position detecting device 202 has a light source 204 for illuminating a surface 206, and light reflected from the surface 206 is directed to a beam splitter 208. The beam splitter directs a reflected beam via imaging optics 210 to a first detector 212, and a transmitted beam via imaging optics 214 to a second detector 216, the detectors 212, 216 being connected to a processor 218.

The detectors 212, 216 provide images of the surface 206 which are in focus for different but overlapping ranges of distance of the beam splitter 208 from surface 206, in order to widen the range of surface depth across which the apparatus 202 can operate without the need for an auto focusing arrangement. The processor 218 adjusts the size of the image generated at detectors 212, 216 in order to compensate for variations in the distance between beam splitter 208 and surface 206, which minimises the error occurring as a result of variation and image size caused by variation and distance between the beam splitter 208 and the surface 206. The processor 218 then automatically chooses the signal from detector 212 or 216 which is in its focal range of operation, and compares corrected image signals at known times, in order to determine the direction and speed of movement of the apparatus 202 across the surface 206.

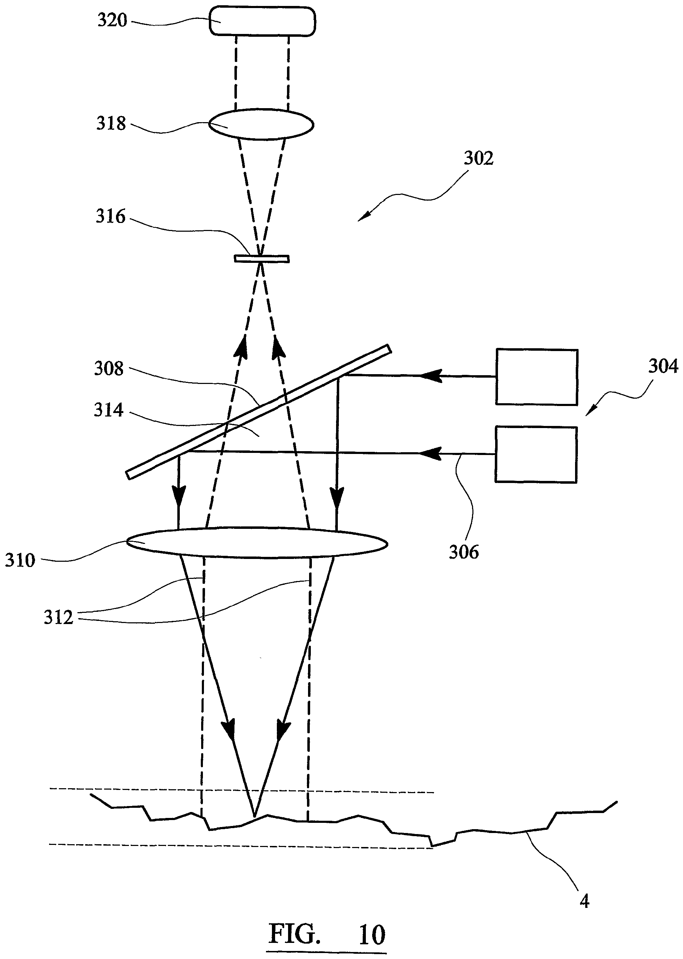

Figure 10 shows an optical detector apparatus 302 of a further embodiment of the invention. The detector apparatus 302 has a plurality of light sources 304 such as lasers, which generate an illumination beam 306 which is directed by a mirror 308 and imaging optics 310 onto the surface 4 in a direction generally at right angles to the surface 4. Alternatively, the mirror 308 can be replaced by a beam splitter (not shown). Light 312 reflected generally at right angles from the surface 4 is directed through a hole 314 in the mirror 308 through an aperture 316 and imaging optics 318 onto a light detector 320 to provide a signal representing features on the surface 4. The imaging optics 310, 318 and aperture 316 form a telecentric lens system which, as will be appreciated by persons skilled in the art, forms an image of generally constant size, independently of the distance of the telecentric lens system form the surface 4. This therefore automatically compensates for variations in the height of the surface 4.

By directing incident and reflected beams along generally parallel axes at right angles to the surface 4, this provides the advantage of minimising the occurrence of errors as a result of shadow effects.

It will be appreciated by persons skilled in the art that the above embodiment has been described by way of example only, and not in any limitative sense, and that various alternations and modifications are possible without departure from the scope of the invention as defined by the appended claims.

## Claims

1. A position determining apparatus comprising:
magnetic detector means (12) for causing magnetic flux to be directed through the surface of an object and for detecting variations in magnetic flux caused by at least one sub-surface or surface feature of the object; and
optical detector means (14) for tracking motion of the apparatus relative to at least one surface feature of the object; drive means (6, 8) for driving the apparatus across the surface of the object; and
control means (16) for controlling the drive means in response to data provided by the magnetic detector means representing sub-surface or surface features of the object, and in response to data provided by the optical detector means.

2. An apparatus according to claim 1, wherein said magnetic detector means comprises magnetic flux directing means (18) for directing magnetic flux through a surface of the object, and magnetic flux detector means (26) for detecting variations in magnetic flux adjacent to said surface as a result of at least one said subsurface or surface feature of the object.

3. An apparatus according to claim 2, wherein said magnetic flux directing means comprises at least one electromagnet.

4. An apparatus according to claim 2 or 3, wherein the magnetic flux detector means comprises at least one Hall Effect sensor.

5. An apparatus according to any one of the preceding claims, wherein said optical detector means comprises illumination means (28) for illuminating the surface of the object with light, and light detector means (32) for detecting light reflected from said surface.

6. An apparatus according to claim 5, wherein said light detector means is adapted to detect the intensity of light reflected from a plurality of locations on said surface.

7. An apparatus according to claim 5 or 6, wherein said light detector means comprises an array of optical detectors.

8. An apparatus according to claim 7, wherein said optical detector means is adapted to determine changes in position in said array of at least one image pattern received by a plurality of said optical detectors.

9. An apparatus according to claim 7 or 8, wherein at least one said optical detector is a CMOS detector or charge coupled device (CCD) detector.

10. An apparatus according to any one of claims 5 to 9, wherein the optical detector mean further comprises beam splitter means (29) and focussing means (30a, 30b) for focussing light onto a plurality of sensors with different focal lengths.

11. An apparatus according to any one of claims 5 to 10, wherein the illumination means is adapted to illuminate the surface in a direction substantially at right angles to the surface, and the light detector means is adapted to detect light reflected from the surface in a direction substantially at right angles from the surface.

12. An apparatus according to claim 11, wherein the illumination means includes light directing means (308, 310, 318) for directing a light beam from a light source onto the surface, and directing a light beam reflected from the surface to a light detector.

13. An apparatus according to claim 12, wherein the light directing means includes a beam splitter.

14. An apparatus according to claim 12 or 13, wherein the light directing means includes a reflector (308) having at least one aperture (314).

15. An apparatus according to any one of the preceding claims, wherein the optical detector means includes a telecentric lens assembly (112).

16. An apparatus according to any one of claims 1 to 14, wherein the optical detector means is adapted to provide corrected image data representing an image of a feature on said surface, wherein the size of said image is corrected to compensate for changes in distance between the surface and the optical detector means.

17. An apparatus according to any one of the preceding claims, further comprising correction means for correcting position data determined by said optical detector means using position data determined by the magnetic detector means.

18. An inspection apparatus comprising inspection means for inspecting an object, and a position determining apparatus according to any one of the preceding claims.

19. A cleaning apparatus comprising cleaning means (10) for cleaning a surface of an object, and a position determining apparatus according to any one of claims 1 to 17.

20. A method for determining the position of an apparatus according to any one of claims 1 to 17 on the surface of an object, the method comprising:-
causing magnetic flux to be directed through the surface of the object;
detecting variations in magnetic flux caused by at least one sub-surface or surface feature of the object by means of magnetic detector means;
determining changes in position of the apparatus relative to at least one surface feature of the object by means of optical detector means;
driving the apparatus across said surface; and
controlling said driving by means of measurement data provided by the magnetic detector means and representing sub-surface or surface features of the object, and by means of measurement data provided by the optical detector means.

21. A method according to claim 20, further comprising correcting the size of an image of a feature on said surface to compensate for changes in distance between an optical detector means of the apparatus and the surface.

22. A method according to claim 20 or 21, further comprising distinguishing between newly detected and previously detected features of the object.

23. A method according to any one of claims 20 to 22, wherein determining changes in position of the apparatus relative to at least one surface feature of the object comprises illuminating the surface in a direction substantially at right angles to the surface, and detecting light reflected from the surface in a direction substantially at right angles from the surface.

## Patentansprüche

1. Eine Positionsbestimmungsvorrichtung, umfassend:
magnetische Detektionsmittel (12) zum Erzeugen eines magnetischen Flusses, der durch die Oberfläche eines Objekts geleitet werden soll, und zum Detektieren von Variationen in dem magnetischen Fluss, die durch mindestens ein unter der Oberfläche befindliches Merkmal oder ein Oberflächenmerkmal des Objekts verursacht werden; und
optische Detektionsmittel (14) zum Verfolgen einer Bewegung der Vorrichtung relativ zu mindestens einem Oberflächenmerkmal des Objekts;
Antriebsmittel (6, 8) zum Führen der Vorrichtung über die Oberfläche des Objekts; und
Steuerungsmittel (16) zum Steuern der Antriebsmittel in Reaktion auf Daten, die von den magnetischen Detektionsmitteln bereit gestellt werden, welche unter der Oberfläche befindliche Merkmale oder Oberflächenmerkmale des Objekts darstellen, und in Reaktion auf Daten, die von den optischen Detektionsmitteln bereit gestellt werden.

2. Eine Vorrichtung nach Anspruch 1, wobei besagte magnetische Detektionsmittel magnetische Flusslenkungsmittel (18) zum Lenken des magnetischen Flusses durch eine Oberfläche des Objekts, und magnetische Flussdetektionsmittel (26) zum Detektieren von Variationen in dem magnetischen Fluss benachbart zu der besagten Oberfläche als Resultat von mindestens einem besagten unter der Oberfläche befindlichen Merkmal oder einem Oberflächenmerkmal des Objekts umfassen.

3. Eine Vorrichtung nach Anspruch 2, wobei besagte magnetische Flusslenkungsmittel mindestens einen Elektromagnet umfassen.

4. Eine Vorrichtung nach Anspruch 2 oder 3, wobei besagte magnetische Flussdetektionsmittel mindestens einen Halleffekt-Sensor umfassen.

5. Eine Vorrichtung nach einem der vorstehenden Ansprüche, wobei besagte optische Detektionsmittel Beleuchtungsmittel (28) zum Beleuchten der Oberfläche des Objekts mit Licht und Lichtdetektionsmittel (32) zum Detektieren von Licht, das von besagter Oberfläche reflektiert wird, umfassen.

6. Eine Vorrichtung nach Anspruch 5, wobei besagte Lichtdetektionsmittel dazu eingerichtet sind, die Intensität von Licht, das von einer Mehrzahl von Orten auf der besagten Oberfläche reflektiert wird, zu detektieren.

7. Eine Vorrichtung nach Anspruch 5 oder 6, wobei besagte Lichtdetektionsmittel ein Array von optischen Detektoren umfassen.

8. Eine Vorrichtung nach Anspruch 7, wobei besagte optische Detektionsmittel dazu eingerichtet sind, Änderungen in der Position in besagtem Array von mindestens einem Bildmuster, das von einer Mehrzahl von besagten optischen Detektoren empfangen wird, zu bestimmen.

9. Eine Vorrichtung nach Anspruch 7 oder 8, wobei mindestens ein besagter optischer Detektor ein CMOS-Detektor oder charge coupled device (CCD) Detektor ist.

10. Eine Vorrichtung nach einem der Ansprüche 5 bis 9, wobei die optischen Detektionsmittel ferner Strahlteilungsmittel (29) und Fokussiermittel (30a, 30b) zum Fokussieren von Licht auf eine Mehrzahl von Sensoren mit verschiedenen Brennweiten umfassen.

11. Eine Vorrichtung nach einem der Ansprüche 5 bis 10, wobei die Beleuchtungsmittel dazu eingerichtet sind, die Oberfläche in einer Richtung im Wesentlichen rechtwinklig zu der Oberfläche zu beleuchten, und die Lichtdetektionsmittel dazu eingerichtet sind, Licht, das von der Oberfläche in einer Richtung im Wesentlichen rechtwinklig zu der Oberfläche reflektiert wird, zu detektieren.

12. Eine Vorrichtung nach Anspruch 11, wobei die Beleuchtungsmittel Lichtlenkungsmittel (308, 310, 318) zum Lenken eines Lichtstrahls von einer Lichtquelle auf die Oberfläche, und zum Lenken eines Lichtstrahls, der von der Oberfläche reflektiert wird, zu einem Lichtdetektor aufweisen.

13. Eine Vorrichtung nach Anspruch 12, wobei die Lichtlenkungsmittel einen Strahlteiler aufweisen.

14. Eine Vorrichtung nach Anspruch 12 oder 13, wobei die Lichtlenkungsmittel einen Reflektor (308) aufweisen, der mindestens eine Öffnung (314) hat.

15. Eine Vorrichtung nach einem der vorstehenden Ansprüche, wobei die optischen Detektionsmittel eine telezentrische Linsenanordnung (112) aufweisen.

16. Eine Vorrichtung nach einem der Ansprüche 1 bis 14, wobei die optischen Detektionsmittel dazu eingerichtet sind, korrigierte Bilddaten, die ein Bild eines Merkmals auf der besagten Oberfläche darstellen, bereitzustellen, wobei die Größe von besagtem Bild korrigiert ist, um Abstandsänderungen zwischen der Oberfläche und den optischen Detektionsmitteln zu kompensieren.

17. Eine Vorrichtung nach einem der vorstehenden Ansprüche, ferner umfassend Korrekturmittel zum Korrigieren von Positionsdaten, die von besagten optischen Detektionsmitteln bestimmt werden durch Benutzung von Positionsdaten, die von den magnetischen Detektionsmitteln bestimmt werden.

18. Eine Untersuchungsvorrichtung, umfassend Untersuchungsmittel zum Untersuchen eines Objekts, und eine Positionsbestimmungsvorrichtung nach einem der vorstehenden Ansprüche.

19. Eine Reinigungsvorrichtung, umfassend Reinigungsmittel (10) zum Reinigen einer Oberfläche eines Objekts, und eine Positionsbestimmungsvorrichtung nach einem der Ansprüche 1 bis 17.

20. Ein Verfahren zum Bestimmen der Position einer Vorrichtung nach einem der Ansprüche 1 bis 17 auf der Oberfläche eines Objekts, wobei das Verfahren umfasst:
Erzeugen eines magnetischen Flusses, der durch die Oberfläche des Objekts geleitet werden soll;
Detektieren von Variationen in dem magnetischen Fluss, die durch mindestens ein unter der Oberfläche befindliches Merkmal oder ein Oberflächenmerkmal des Objekts verursacht werden, mittels magnetischer Detektionsmittel;
Bestimmung von Positionsänderungen der Vorrichtung relativ zu mindestens einem Oberflächenmerkmal des Objekts mittels optischer Detektionsmittel;
Führen der Vorrichtung über die besagte Oberfläche; und
Steuern dieses Führens mittels Messdaten, die von den magnetischen Detektionsmitteln bereit gestellt werden, und welche unter der Oberfläche befindliche Merkmale oder Oberflächenmerkmale des Objekts darstellen, und mittels Messdaten, die von den optischen Detektionsmitteln bereit gestellt werden.

21. Ein Verfahren nach Anspruch 20, ferner umfassend Korrigieren der Größe eines Bildes von einem Merkmal auf besagter Oberfläche, um Abstandsänderungen zwischen einem optischen Detektionsmittel der Vorrichtung und der Oberfläche zu kompensieren.

22. Ein Verfahren nach Anspruch 20 oder 21, ferner umfassend Unterscheiden zwischen neu detektierten und zuvor detektierten Merkmalen des Objekts.

23. Ein Verfahren nach einem der Ansprüche 20 bis 22,
wobei die Bestimmung von Positionsänderungen der Vorrichtung relativ zu mindestens einem Oberflächenmerkmal des Objekts die Beleuchtung der Oberfläche in einer Richtung im Wesentlichen rechtwinklig zu der Oberfläche, und die Detektierung von Licht, das von der Oberfläche in einer Richtung im Wesentlichen rechtwinklig zu der Oberfläche reflektiert wird, umfasst.

## Revendications

1. Appareil de détermination de position comprenant :
un moyen de détection magnétique (12) pour amener un flux magnétique à être dirigé à travers la surface d'un objet et pour détecter les variations du flux magnétique causées par au moins une caractéristique de surface ou de subsurface de l'objet ; et
un moyen de détection optique (14) pour suivre le mouvement de l'appareil par rapport à au moins une caractéristique de surface de l'objet ;
un moyen d'entraînement (6, 8) pour entraîner l'appareil sur la surface de l'objet ; et
un moyen de commande (16) pour commander le moyen d'entraînement en réponse à des données fournies par le moyen de détection magnétique représentant des caractéristiques de surface ou de subsurface de l'objet et en réponse à des données fournies par le moyen de détection optique.

2. Appareil selon la revendication 1, dans lequel ledit moyen de détection magnétique comprend un moyen de direction de flux magnétique (18) pour diriger un flux magnétique à travers une surface de l'objet et un moyen de détection de flux magnétique (26) pour détecter les variations du flux magnétique à proximité de ladite surface en raison d'au moins ladite caractéristique de surface ou de subsurface de l'objet.

3. Appareil selon la revendication 2, dans lequel ledit moyen de direction de flux magnétique comprend au moins un électroaimant.

4. Appareil selon la revendication 2 ou 3, dans lequel le moyen de détection de flux magnétique comprend au moins un capteur à Effet Hall.

5. Appareil selon l'une quelconque des revendications précédentes, dans lequel ledit moyen de détection optique comprend un moyen d'éclairage (28) pour éclairer la surface de l'objet avec de la lumière et un moyen de détection de lumière (32) pour détecter la lumière réfléchie par ladite surface.

6. Appareil selon la revendication 5, dans lequel ledit moyen de détection de lumière est adapté pour détecter l'intensité de la lumière réfléchie par une pluralité d'emplacements sur ladite surface.

7. Appareil selon la revendication 5 ou 6, dans lequel ledit moyen de détection de lumière comprend un réseau de détecteurs optiques.

8. Appareil selon la revendication 7, dans lequel ledit moyen de détection optique est adapté pour déterminer des changements de position dans ledit réseau d'au moins un motif d'image reçu par une pluralité desdits détecteurs optiques.

9. Appareil selon la revendication 7 ou 8, dans lequel au moins l'un desdits détecteurs optiques est un détecteur CMOS ou un détecteur à dispositif à couplage de charges (CCD).

10. Appareil selon l'une quelconque des revendications 5 à 9,
dans lequel le moyen de détection optique comprend en outre un moyen de division de faisceau (29) et un moyen de focalisation (30a, 30b) pour focaliser la lumière sur une pluralité de capteurs de différentes longueurs focales.

11. Appareil selon l'une quelconque des revendications 5 à 10, dans lequel le moyen d'éclairage est adapté pour éclairer la surface dans une direction faisant sensiblement un angle droit avec la surface et le moyen de détection de lumière est adapté pour détecter la lumière réfléchie par la surface dans une direction sensiblement à angle droit par rapport à la surface.

12. Appareil selon la revendication 11, dans lequel le moyen d'éclairage comporte un moyen de direction de lumière (308, 310, 318) pour diriger un faisceau de lumière provenant d'une source de lumière sur la surface et diriger un faisceau de lumière réfléchi par la surface vers un détecteur de lumière.

13. Appareil selon la revendication 12, dans lequel le moyen de direction de lumière comporte un diviseur de faisceau.

14. Appareil selon la revendication 12 ou 13, dans lequel le moyen de direction de lumière comporte un réflecteur (308) ayant au moins une ouverture (314).

15. Appareil selon l'une quelconque des revendications précédentes, dans lequel le moyen de détection optique comporte un ensemble lentille télécentrique (112).

16. Appareil selon l'une quelconque des revendications 1 à 14, dans lequel le moyen de détection optique est adapté pour fournir des données d'image corrigées représentant une image d'une caractéristique sur ladite surface, où la taille de ladite image est corrigée pour compenser les changements de distance entre la surface et le moyen de détection optique.

17. Appareil selon l'une quelconque des revendications précédentes, comprenant en outre un moyen de correction pour corriger des données de position déterminées par ledit moyen de détection optique en utilisant des données de position déterminées par le moyen de détection magnétique.

18. Appareil d'inspection comprenant un moyen d'inspection pour inspecter un objet et un appareil de détermination de position selon l'une quelconque des revendications précédentes.

19. Appareil de nettoyage comprenant un moyen de nettoyage (10) pour nettoyer une surface d'un objet et un appareil de détermination de position selon l'une quelconque des revendications 1 à 17.

20. Procédé de détermination de la position d'un appareil selon l'une quelconque des revendications 1 à 17 sur la surface d'un objet, le procédé comprenant le fait :
d'amener un flux magnétique à être dirigé à travers la surface de l'objet ;
de détecter les variations du flux magnétique causées par au moins une caractéristique de surface ou de subsurface de l'objet à l'aide d'un moyen de détection magnétique ;
de déterminer les changements de position de l'appareil par rapport à au moins une caractéristique de surface de l'objet à l'aide d'un moyen de détection optique ;
d'entraîner l'appareil sur ladite surface ; et
de commander ledit entraînement à l'aide de données de mesure fournies par le moyen de détection magnétique et représentant des caractéristiques de surface ou de subsurface de l'objet et à l'aide de données de mesure fournies par le moyen de détection optique.

21. Procédé selon la revendication 20, comprenant en outre la correction de la taille d'une image d'une caractéristique sur ladite surface pour compenser les changements de distance entre un moyen de détection optique de l'appareil et la surface.

22. Procédé selon la revendication 20 ou 21, comprenant en outre la distinction entre les caractéristiques nouvellement détectées et précédemment détectées de l'objet.

23. Procédé selon l'une quelconque des revendications 20 à 22, dans lequel la détermination de changements de position de l'appareil par rapport à au moins une caractéristique de surface de l'objet comprend l'éclairage de la surface dans une direction faisant sensiblement un angle droit avec la surface et la détection de la lumière réfléchie par la surface dans une direction sensiblement à angle droit par rapport à la surface.
